# EUROPEAN PATENT SPECIFICATION

(11) **EP 1 721 785 B1**
(45) Date of publication and mention of the grant of the patent: **26.01.2011**
(21) Application number: 05010295.3
(22) Date of filing: 12.05.2005
(51) Int. Cl.: B60R 16/02, H04B 5/02, B60R 25/00

(54) **Apparatus and method for remote control of an electronic device**
Vorrichtung und Verfahren zum Fernsteuern einer elektonischen Komponente
Dispositif et méthode pour le contrôle à distance d'un composant électronique

(43) Date of publication of application: 15.11.2006
(73) Proprietor: Harman Becker Automotive Systems GmbH, 76307 Karlsbad (DE)
(72) Inventor: Tippelt, Wolf-Torsten, 70563 Stuttgart (DE)
(74) Representative: Bertsch, Florian Oliver

(56) References cited:
- EP-A- 1 454 769
- GB-A- 2 298 300
- US-A- 4 616 224
- US-A- 5 198 629
- US-A- 5 905 444

## Description

The present invention relates to a control apparatus and a control method for wireless transmission of a control signal to a processing device for controlling a remote electronic device. In particular, the present invention relates to a control apparatus for controlling an electronic device mounted inside a vehicle (e.g. in the vehicle compartment), especially a built-in infotainment system.

Control devices for control of electronic devices mounted in the passenger compartment of vehicles, such as a vehicle sound systems, navigation systems or the like, are well known from the art.

As examples for such control systems, there may be provided simple buttons on operation panels arranged at the outside of the housing of the respective electronic device or as separate devices provided within the reaching distance of the driver for operation of the electronic device. Such a control device may be integrated in the steering wheel or the head unit of the vehicle, for example, to be conveniently operated by the driver. Most of these devices are connected by wiring cables of the wire harness of the vehicle to the electronic device which shall be operated.

On the other hand, remote control systems have been developed on the basis of infrared transmission, or the like. However, such remote control devices exhibit an increased size which at least partially results from the battery provided in the housing of the remote control device for power supply. Additionally, due to the presence of the battery, some maintenance is required for exchange of discharged batteries.

Speech recognition systems may be as well considered to represent examples for wireless transmission of control signals to an electronic device to be controlled, which do not require nor an integrated battery and neither a large sized input device, but merely a microphone which is connected to a speech recognition unit. The use of speech control systems, however, requires a speech recognition unit being integrated in the electronic device or in a separate electronic unit what leads to an increase of costs. Moreover, in dependence on the quality of speech recognition offered by such a speech recognition system, it may be difficult to precisely control different functions of the electronic device during the drive so that required accuray of operation may not be fulfilled. Further, difficulties in recognition of the operator's command may result in focusing the operator's attention on the operation of the electronic device what may influence the driving security and the driver's attention to the surrounding traffic situation.

GB 2 298 300 discloses a security system for battery-powered equipment, a vehicle key of the security system having a transponder that is inserted into the lock. The transponder transmits an identification code for unlocking the system. Only when the correct key is inserted into the lock, the battery power is started.

US 4,616,224 discloses, according to the preambule of claim 1 a multifunctional steering wheel comprising different buttons. When the buttons are pressed, signals are transmitted to a receiver using a transmitter, the receiver being provided in the steering wheel. For transmission wireless communication techniques using an infrared electronic energy is used.

Accordingly, it has been an object of the invention to provide an improved control apparatus and a method for controlling an electronic device, allowing the controlling of other electronic devices with summarized spare requirements.

This object is accomplished by a control apparatus according to claim 1 and a control method according to claim 14. The dependent claims illustrate particular advantages of the invention and are directed to preferred embodiments of the invention.

The basic idea of the present invention is to utilize the transponder technology, in particular passive transponders, as a basis for providing a control apparatus for transmission of a control signal to a distant electronic device. According to the invention, a control appartus is provided which comprises a transponder, disabling means for disabling signal transmission by a transmission means of the responder and enabling means for enabling signal transmission when the transmission means is in a disabled state. For this purpose, the enabling means is configured to be operated by a user for signal transmission.

Referring to the background of the relevant technology utilized by the present invention, in general, a transponder is a wireless communication device which is usually attached to a satellite. The term is a combination of the words transmitter and responder. A transponder receives and transmits radio signals at a prescribed frequency range. After receiving the signal, a transponder will at the same time broadcast the signal at a different frequency. Transponders are used in satellite communications and in location, identification or navigation systems.

The development of the transponder technology in recent times has been boosted in particular by the Radio Frequency Identification Technology (RFID) used in a broad range of applications worldwide including access control, automotive, document tracking, livestock, product auto-identification, retail, sports timing, supply chain, ticketing and wireless payment and the like.

The RFID technology, in principle, is similar to a code identification. With RFID, electromagnetic or electrostatic coupling in the radio frequency portion of the electromagnetic spectrum is used to transmit signals. Accordingly, an RFID system consists of an antenna and a transceiver which reads the radio frequency and transfers the information to a reading device and a transponder or tag which in most cases is an integrated circuit containing the RF circuitry and the information to be transmitted.

Preferably, passive transponders may be used for the present invention, which may be operated on the basis of inductive coupling or electrical coupling for voltage supply. However, in principle, also transponders based on electromagnetic backscattering coupling, which are often used with backup battery for transmitting signals over longer distances, or surface acoustic wave transponders may be used.

The type of transponder used for the present invention is selected in dependence on the distance between the electronic apparatus and the electronic device to be controlled, and the frequency. For example, so-called "remote coupling" system for distances up to 1m may be used, which are normally operated at usual frequencies of 100 to 135 KHz, 6,75 MHz, 13,56 MHz and 27,125 MHz.

On the hand, long range systems for ranges between 1m-10m are normally operated at frequencies of 915 MHz, 2,45 GHz, 5,8 GHz, and 24,125 GHz, for example.

The invention utilizes the feature of passive transponders which do not have their own battery on board for powering up the transponder but operate on the energy received from an energy field provided by an external energy supply means.

According to the invention, the control apparatus for wireless transmission of a control signal comprises a transponder having receiving means for receiving a signal from an external device and signal transmission means for automatically transmitting a control signal to a processing device in response to the received signal and coupling means for power supply of the transmission means by utilization of an electromagnetic or magnetic field, for example, provided by an external energy supply means.

In order to configure the transponder as a control apparatus, according to the invention a disabling means for disabling signal transmission by the transmission means and enabling means for enabling signal transmission after disabling by the disabling means is provided, wherein the enabling means is adopted to be operated by a user for signal transmission. Here, preferably, the enabling means is adopted to be operated by the user by finger contact. For example, the enabling means may comprise a membrane key operated by the user (driver).

In a simple embodiment, the external energy supply means and the external device which send a signal to the transponder are identical. That is, the transponder automatically transmits a response signal after coupling with the external energy supply means, under the condition that the enabling means is actuated by the user.

In an advantageous embodiment of the invention, the enabling means comprises a switch which provides for electrical connection of the circuitry of the transmission means, which is otherwise interrupted. The operation of the switch opens and may close a loop of a coil (antenna) of the coupling means for power supply of the transmission means. In this case - without being restricted thereto - the disabling means according to the invention may be constituted by an interrupted section of an antenna of the coupling means.

The processing device in the sense of the present invention is an external device which serves to transmit a signal to the control apparatus and to receive the response signal a transmitted from the control apparatus in response to the received signal. Further, the processing device comprises a control unit for control of the electronic device on the basis of the control signal received from the control apparatus. The processing device of the present invention may comprise the external power supply means for coupling with the coupling means of the control apparatus.

The processing device in the sense of the present invention does not necessarily have to be an integral component, but may consist of separated units for transmission of the signal, receiving of the response signal and control of the electronic device, which may be connected by wire or may communicate with each other on the basis of wireless technology.

While it is preferable to use a transponder having no internal power supply source (so-called "passive transponders"), also active transponders having a microchip and an internal power supply source for voltage supply of the microchip may be used with the present invention. This may result in a small increase in size, but, nevertheless, the further advantages of the invention can be realized. On the microchip the data for control of the electronic device is stored, which is transmitted upon receipt of the signal as a response signal to the processing device. A device for storing such data may be a conventional EEPROM or FRAM memory device, for example.

That is, in the sense of the invention a passive transponder is to be understood as a transponder comprising a coupling means for power supply of the transmission means by utilization of an external energy field. Preferably, the external power supply means which provides the required field for coupling may be provided with the electronic device to be controlled. However, it may also be provided as a separate unit or component.

Preferably, according to the present invention, a control apparatus according to claim 1 is structurally integrated into per se known structural elements of a passenger compartment of a vehicle such as a steering-wheel, a control device for a MMI (Men-Machine-Interface) such as a head unit of an infortainment system, or the like.

The control apparatus according to the invention may comprise an increment for transmission of different signals in response to the operation input by the user. Here it may be preferable to combine two control apparatuses with an incrementer for providing the required signals, for example, for increase/decrease of volume.

Preferably, the transponder comprises a microchip mounted on a thin film substrate and a large-area coil for inductive coupling arranged on the same thin film substrate.

For data/ signal-transmission, a bluetooth configuration which may be already installed in the compartment of the vehicle may be used, for example.

The invention also provides a control system comprising the electronic device to be controlled, a control apparatus according to the invention, as well as an external energy supply means and a processing device which are both adapted to be used with a control apparatus according to the invention.

Preferably, the external energy supply means is integrated in the external processing device receiving the control signal as a response signal from the transponder. For this purpose, the processing device may comprise an antenna coil which generates a strong high frequency electromagnetic field which penetrates the cross-section of the coil area of the coupling means of the transponder of the control apparatus and the area around the coil.

Preferably, the external energy supply means and the processing device of the control system according to the invention are integrated in an infotainment system mounted within a vehicle compartment. The control device may be mounted on the steering-wheel of the vehicle. The power supply for the processing device and the external energy supply means is provided upon start of the vehicle by operating the ignition switch by the driver. In response, an antenna coil of the external energy supply means generates a strong high frequency electromagnetic field which penetrates the antenna coil of the coupling means of the transponder which is located some distance away from the antenna coil of the external energy supply means, typically about 10 to 80 cm. The frequency used for transmission of signals depends on the distance between the processing device and the transponder and may be in the range of UHF frequencies (e.g. 868 MHz) or microwave frequencies in the range of several GHz (e.g. 5.8 GHz), for example. A short wave length of these frequency ranges facilitates a construction of antennas with far smaller dimensions and greater efficiency than would be possible using frequency ranges below 30 MHz. However, of course, in dependence on the type of transponder other frequency ranges may be used and the application of the present invention is generally not restricted to any particular frequency range.

As mentioned above, also active transponders may be used which comprise a battery which serves for power supply of the microchip. That is, in such a case the battery does not provide power supply for the transmission of data between transponder and reader which exclusively relies upon the power of the field emitted by the external energy supply means.

A significant advantage of the control apparatus according to the present invention results from the fact that it is not necessary to provide a battery for power supply within the control apparatus which comprises a coupling means for receiving energy from an external power supply device. For this reason, the control apparatus according to the present invention can be constituted by a passive transponder the power supply of which is interruptible by a membrane key, for example, as mentioned above. In this connection, the present invention takes advantage of the development of transponder technology in connection with RFID-technology which provides passive transponders with very low sizes at low costs. For example, so called "smart labels" comprising a chip and an antenna printed in thin film technique may be utilized after simply mounting a membrane key for interrupting a section of the antenna by the user for transmitting the control signal as a response signal to the signal received from the processing device.

The invention also provides a control method for wireless transmission of a control signal to a processing device for controlling a remote electronic device, which comprises the steps of receiving a signal from an external device, and automatically transmitting a control signal to an external processing device in response to the received signal. The control method further comprises the step of enabling signal transmission by operating an enabling means by a user for signal transmission.

Preferably, the method comprises the further step of electrical or inductive coupling with a field provided by an external energy supply means for power supply for receiving said signal from an external device and/or transmitting said control signal to an external processing device in response to the received signal.

According to the invention the enabling step comprises closing a cirucit for power supply of said transmission means and/or said receiving means. More preferably, the enabling step comprises closing an interruption of a coil for inductive or electrical coupling for power supply.

Further advantages, details and modes for carrying out the present invention shall become apparent from the description of preferred embodiments with reference to the accompanying drawings, in which
- Fig. 1: shows a schematic block diagram of a control system according to the invention,
- Fig. 2: shows an embodiment of the transponder of a control apparatus according to the present invention,
- Fig. 3: shows a control system according to the present invention as an example for integration into a navigation system mounted in a passenger compartment of a vehicle, and
- Fig. 4: shows a schematic diagram illustrating the steps of a control method according to the invention which is applied for control of a navigation system.

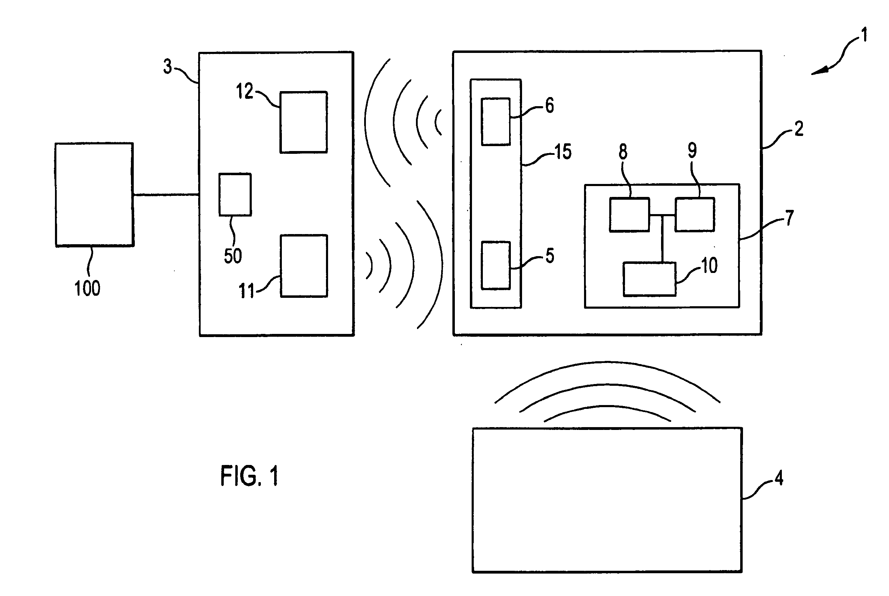

Fig. 1 schematically illustrates the structure of a control system 1 according to the present invention. The control system 1 comprises a control apparatus 2, a processing device 3 and an external energy supply device 4.

The processing device 3 serves to receive the control signals from the control apparatus and transmits the received control signal to the electronic device to be controlled, and comprises a signal transmission unit 11, a response signal receiving unit 12 and control unit 50 for control of the electronic device 100, to which the processing device 3 is connected.

The external energy supply device 4 serves to provide energy radiation for coupling by the coupling unit 7 of the control appartus 2, which is described below in more detail. While in this embodiment the energy supply device 4 is shown to be a separate unit, the invention is not restricted to such a configuration and may be put to practice by use of a processing device 3 in which the energy supply device 4 is integrated.

The control apparatus 2 according to this embodiment comprises a transponder 15 having a signal receiving unit 5 for receiving a signal from the processing device 3, a response signal transmission unit 6 for transmitting a response signal, which is the control signal for controlling the electronic device 100, in response to the signal received from the processing device 3. The control apparatus 2 further comprises a coupling unit 7 for power supply of the receiving unit 5, and/or the response signal transmission unit 6. The coupling unit 7 comprises a disabling unit 8 and an enabling unit 9. The disabling unit 8 serves to disable the signal transmission by the response signal transmission unit 6. The enabling unit 9 serves to enable a response signal transmission after disabling by the disabling unit 8. For this purpose, the coupling unit 7 further comprises an input device 10 which is suitable to be operated by a user.

The control system 1 further comprises an external energy supply device 4 for generating a field for supplying energy to the control apparatus 2 by electrical or inductive coupling, for example. The energy emitted by the energy supply device 4 is transformed by the coupling unit 7 for power supply of the components of the control apparatus 2. In particular, the power supplied by the energy supply device 4 and the coupling unit 7 serves to supply power to the response signal transmission unit 6 and/or the receiving unit 5 in dependence on the desired application.

While in the present embodiment the disabling unit 8 and the enabling unit 9 are shown as separate components, both units, the disabling unit 8 and the enabling unit 9, may be integrated to form a unitary part. This integrated component may comprise also the input device 10.

Further, in Fig. 1 the disabling unit 8 and the enabling unit 9 are shown to be integral parts of the coupling device 7. However, the present invention is not restricted to such a configuration and may be put to practice by a modification in which the disabling unit 8 and the enabling unit 9 are not integrated in the coupling device 7. For example, both units 8 and 9 may be constituted by a unitary device such as a switch for opening and closing the voltage supply circuitry of the control apparatus 2. Alternatively, the disabling unit 8 and the enabling unit 9 may be located at the response signal transmission unit 6, for example.

As to further modifications of the control system 1 shown in Fig 1, the energy supply device 4 may be formed by a component located in the processing device 3. For example, the signal transmission unit 11 may be constituted by the external energy supply device being integrated into the processing device 3. Such a structure may be a beneficial in terms of integration of the components into an infortainment system of a vehicle, for example.

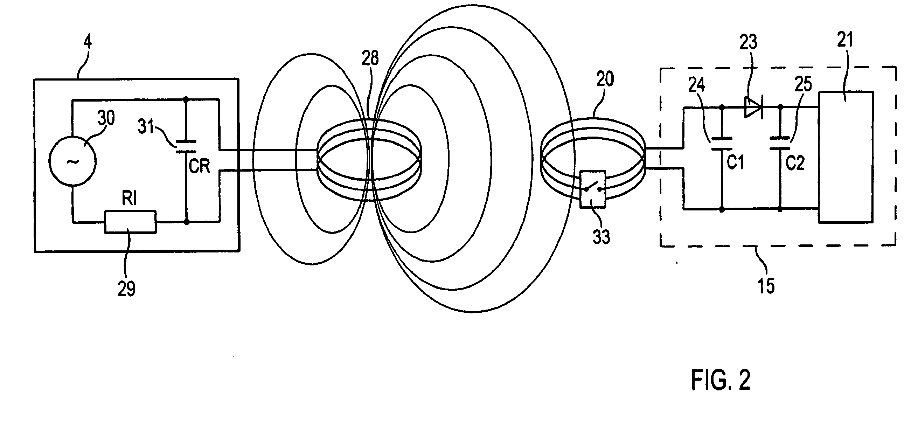

While Fig. 1 illustrated a general embodiment of a control system according to the invention, in Fig. 2 an embodiment of transponder 15 of control apparatus 2 shown in Fig. 1 is shown in an embodiment of a processing device 3 for illustrating the power supply of the transponder 15 from the more practical view point.

According to Fig. 2, an inductively coupled transponder 15 comprises an electronic data-carrying device, such as a single microchip 21 and a large area coil 20 which works as an antenna. The antenna comprises a membrane key 33 operable by a user by finger contact operation. The transponder 15 comprises a first capacitor C1 24 and a second capacitor C2 25 and a diode 23.

The voltage needed for the operation of the microchip 21 is provided by the device 30 which comprises a power supply 30, a capacitor CR 31 and a resistor RI 29. In the present embodiment, the energy supply means 4 and the processing device 3 are integrated into the device 30. For this purpose, the antenna coil 28 of the device 30 generates a strong high frequency electromagnetic field which penetrates the cross-section of the coil area and the area around the coil. A small part of the emitted field penetrates the antenna coil 20 of the transponder 15, which is some distance away from the coil 28 of the energy supply device 4. A voltage U is generated in the transponder's 15 antenna coil 20 by inductance. This voltage is rectified and serves as a power supply for the data-carrying device, the microchip 21. The capacitor C 31 of the energy supply device 4 is connected in parallel with the antenna coil 28 of the processing device 4, the capacitance of the capacitor 31 being selected such that it works with the coil inductance of the antenna coil 28 to form a parallel resonant circuit with a resonant frequency that corresponds with a transmission frequency of the device 30. Very high currents can be generated in the antenna coil 28 of the device 30 by resonance step-up in the parallel resonance circuit which can be used to generate the required field strength for the operation of the remote transponder 15.

Incidentally, while in the present embodiment only one microchip is shown, a plurality of microchips 21 may be provided all of them being connected to the antenna 20 of the transponder 15.

The antenna coil 20 of the transponder 15 and the capacitor C1 24 form a resonant circuit tuned to the transmission frequency of the device 30. The voltage U at the transponder coil 20 reaches a maximum due to resonance step-up in the parallel resonant circuit.

While the present embodiment has been described as an example for inductive coupling, according to the invention also electrical coupling may be employed to put the invention to practice. In this case of electrically coupled systems the external power supply device generates a strong, high-frequency electrical field. The antenna of the external power supply device consists of a large electrically conductive area, i.e. an electrode, generally a metal foil or a metal plate. If a high-frequency voltage is applied to the electrode, a high-frequency electric field forms between the electrode and the earth potential (ground). The voltages required for this, ranging between a view hundred volts and a view thousand volts, are generated in the energy supply device by voltage rise in a resonance circuit made up of a coil in the energy supply device plus a parallel connection of an internal capacitor and the capacitance active between the electrode and earth potential. The resonant frequency of the resonance circuit corresponds with the transmission frequency of the external energy supply device.

The antenna of the transponder may be made up of two conductive surfaces lying in a plane (electrodes). If the transponder is placed within the electrical field of the external energy supply device, then an electric voltage rises between two transponder electrodes which is used to supply power to the transponder chip.

As to the mode of data transfer between the respective devices, in the structures of the embodiments shown in Figs. 1 and 2, the data exchange between the processing device 3 of Fig. 1 and/or the device 30 of Fig. 2, and the control apparatus 2 may take place according to full and half duplex procedures or sequential procedures (SEQ) as known in the art in the half duplex group (HDX) and the full duplex group (FDX).

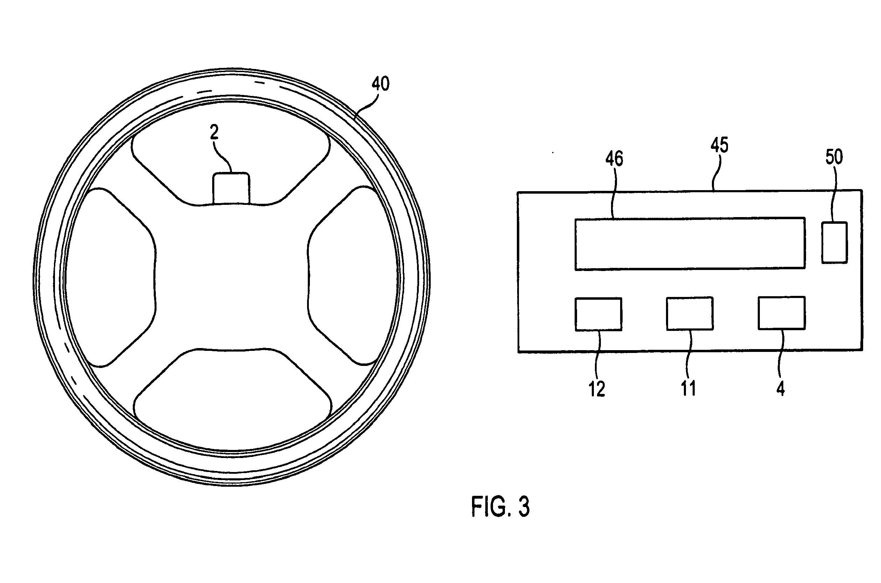

In Fig. 3, an application of a control system according to the invention for controlling a navigation system mounted in the vehicle is shown. On a steering wheel 40 a control apparatus 2 is formed to be operatable by the driver. In the present embodiment, the disabling unit 8 and the enabling 9 are constituted by a membrane key. Unless the driver operates the membrane key, the connection of the antenna is disrupted. By operating the membrane key an electrical connection is provided because the antenna loop is closed. Thereby, a response signal can be transmitted to a receiving unit 12 of a processing device 3 integrated in a navigation system 45, having a navigation unit 46, mounted in the passenger compartment of a vehicle.

According to the present invention, also the energy supply device 4 is provided within the housing of the navigation system 45 and provides continuously an electromagnetic field for inductive coupling with a control apparatus 2 mounted on the steering wheel 40.

While in the present embodiment only one control apparatus is realized, also a plurality of control apparatuses formed in thin film technique may be attached to the steering wheel, for example by adhesive attachment. They may be combined in one device with an incrementer for providing the required different control signals.

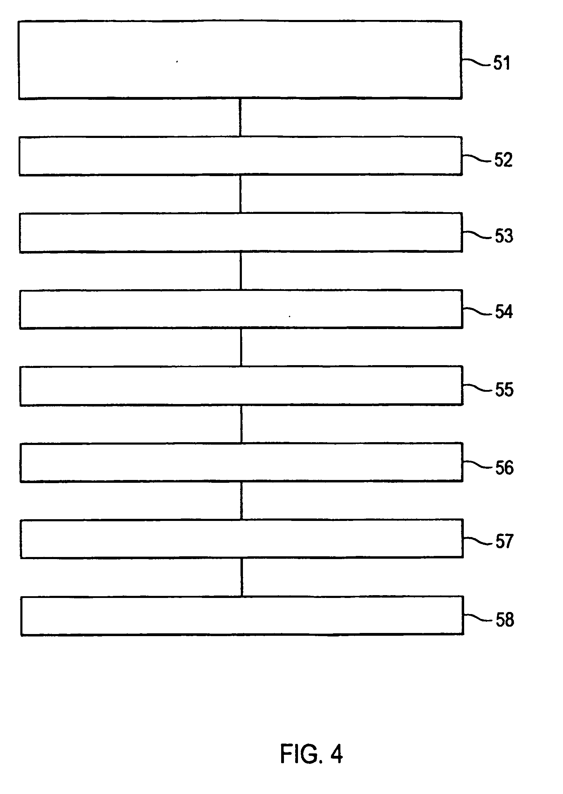

In the following, with reference to Fig. 4, a method for controlling an electronic device (such as the navigation system 45 shown in Fig. 3) is described with reference to steps 51 to 58 illustrating the sequence of the steps as an example for a method for controlling an electronic device according to the present invention.

In step 51, an external energy supply device continuously emits an electromagnetic field. A control apparatus receives the field emitted by the external energy supply device in step 52. However, since the antenna coil is disrupted, no power supply is provided to the control apparatus.

In step 53, the driver of the vehicle operates an enabling unit (membrane switch for example), thereby closing the antenna coil of the transponder. As a consequence, in step 54 voltage is supplied to a transponder including a response signal transmission unit.

In step 55, the control apparatus transmits a response signal as a control signal for controlling a remote electronic device to a processing device. The processing device is coupled with the electronic device and the signal received in step 56 by the processing device is used for controlling one or more function(s) of the electronic device in step 57.

The function to be controlled by a control apparatus according to the invention, in the case of a navigation system may be volume, height, automatic station finder and the like, and is not limited to any of these functions. For example, for different functions a plurality of respective enabling/disabling means may be realized as separate parts as integrated into one component.

In step 58, after the respective function of the navigation system has been controlled (for example, set to a predetermined value) the operator terminates the transmission of the control signal by simply releasing the membrane key. The function to be controlled by the control apparatus according to the invention may be set directly at the navigation system. Alternatively, several control apparatuses may be provided for different functions.

While the present invention has been described above as an application for control of a navigation system mounted in a vehicle, the present invention is not restricted to this application and any other electronic device or component may be controlled by a control apparatus according to the invention based on a transponder modified according to the present invention.

## Claims

1. Control apparatus mounted on a steering wheel of a vehicle for wireless transmission of a control signal to a processing device (3) for controlling a remote electronic device (100), said control apparatus (2) comprising
- a transponder (15) having
- receiving means (5) for receiving a signal from the processing device (3)
- response signal transmission means (6) for automatically transmitting a control signal to said processing device (3) in response to the received signal,
**characterized in that** said transponder comprises
- coupling means (7) inductive coupling with an external energy supply means (4) for power supply of said control apparatus (2),
wherein said control apparatus (2) further comprises disabling means (8) for disabling automatic signal transmission by said transmission means (6) and enabling means (7) for enabling automatic signal transmission when said signal transmission is disabled, wherein said enabling means (7) is configured to be operated by the finger contact of a user for enabling signal transmission, said enabling means (7) closing an interruption of an antenna coil (20) for coupling for power supply of said transponder.

2. Control apparatus according to claim 1, **characterized in that** said enabling means (7) comprises a membrane key (33).

3. Control apparatus according to claim 1 or 2, **characterized in that** said enabling means (7) comprises a switch.

4. Control apparatus according to at least one of the preceding claims, **characterized in that** said disabling means (8) is constituted by an interrupted section of an antenna (20) of the control apparatus (2).

5. Control apparatus according to at least one of the preceding claims, **characterized by** an incrementer for transmission of different signals in response to the input by the user.

6. Control apparatus according to at least one of the preceding claims, **characterized in that** said transponder (15) comprises at least one microchip (21) mounted on a thin film substrate, on which control data relating to the control signal to be transmitted as response signal is stored.

7. Control apparatus according to claim 6, **characterized in that** said control data relating includes data relating to different parameters of the functions of the electronic device (100) to be controlled in accordance with the selection of the user.

8. Control apparatus according to at least one of the preceding claims, **characterized in that** said transponder (15) comprises a large-area coil (20) for inductive coupling arranged on a thin film substrate.

9. Control apparatus according to at least one of the preceding claims, **characterized in that** said transponder (15) is a passive transponder.

10. Control apparatus according to at least one of the preceding claims, **characterized in that** said transponder (15) is an active transponder having a microchip (21) and an internal power supply source for voltage supply of said microchip (21).

11. Control system comprising an external energy supply means (4) and a processing device (3), both adapted to be used with a control apparatus according to at least one of the preceding claims.

12. Built-in electronic device for a vehicle comprising a control system according to claim 11, wherein the control signal transmitted by said control apparatus (2) is for controlling said electronic device (100).

13. Built-in electronic device for a vehicle according to claim 12, **characterized by** comprising a navigation system (45) having a processing (3) device and control device (50) for controlling said navigation system on the basis of signals received from said control apparatus (2).

14. Control method for wireless transmission of a control signal from a steering wheel of a vehicle to a processing device for controlling a remote electronic device (100), said control method comprising the steps of
- receiving a signal from an external device (3), and
- automatically transmitting a control signal to said external processing device (3) in response to the received signal,
wherein
said control method further comprises the step of enabling signal transmission when said transmission of said control signal is disabled,
by operating an enabling means by a user for signal transmission, the enabling step comprises closing an interruption of an antenna coil (20)
for coupling for power supply of a transponder (15).

15. Control method according to claim 14, **characterized by** the further step of electrical or inductive coupling with a field provided by an external energy supply means (4) for power supply for receiving said signal from said external processing device (3) and/or transmitting said control signal to said external processing device (3) in response to the received signal.

## Patentansprüche

1. Steuervorrichtung, welche an einem Lenkrad eines Fahrzeuges für eine drahtlose Übertragung eines Steuersignals zu einer Verarbeitungsvorrichtung (3) zum Steuern einer abgesetzten elektronischen Vorrichtung (100) angebracht ist, wobei die Steuervorrichtung (2) umfasst:
- eine Sende-/Empfangsvorrichtung (15) mit
- einem Empfangsmittel (5) zum Empfangen eines Signals von der Verarbeitungsvorrichtung (3),
- ein Antwortsignalübertragungsmittel (6) zum automatischen Übertragen eines Steuersignals zu der Verarbeitungsvorrichtung (3) in Abhängigkeit von dem empfangenen Signal, **dadurch gekennzeichnet, dass** die Sende-/Empfangsvorrichtung umfasst:
- ein Koppelmittel (7) zum induktiven Koppeln mit einem externen Energieversorgungsmittel (4) zum Versorgen der Steuervorrichtung (2) mit Energie,
wobei die Steuervorrichtung (2) ferner umfasst:
Deaktivierungsmittel (8) zum Deaktivieren einer automatischen Signalübertragung durch das Übertragungsmittel (6) und Aktivierungsmittel (7) zum Aktivieren einer automatischen Signalübertragung, wenn die Signalübertragung deaktiviert ist, wobei das Aktivierungsmittel (7) ausgestaltet ist, durch den Fingerkontakt eines Benutzers zum Aktivieren der Signalübertragung betätigt zu werden, wobei das Aktivierungsmittel (7) eine Unterbrechung einer Antennenspule (20) zum Koppeln mit einer Energieversorgung der Sende-/Empfangsvorrichtung schließt.

2. Steuervorrichtung nach Anspruch 1, **dadurch gekennzeichnet, dass** das Aktivierungsmittel (7) eine Membrantaste (33) umfasst.

3. Steuervorrichtung nach Anspruch 1 oder 2, **dadurch gekennzeichnet, dass** das Aktivierungsmittel (7) einen Schalter umfasst.

4. Steuervorrichtung nach mindestens einem der vorhergehenden Ansprüche, **dadurch gekennzeichnet, dass** das Deaktivierungsmittel (8) durch einen unterbrochenen Abschnitt einer Antenne (20) der Steuervorrichtung (2) gebildet wird.

5. Steuervorrichtung nach mindestens einem der vorhergehenden Ansprüche, **gekennzeichnet durch** einen Schrittzähler zum Übertragen von unterschiedlichen Signalen in Abhängigkeit von der Eingabe des Benutzers.

6. Steuervorrichtung nach mindestens einem der vorhergehenden Ansprüche, **dadurch gekennzeichnet, dass** die Sende-/Empfangsvorrichtung (15) mindestens einen auf einem Dünnschichtsubstrat angebrachten Mikrochip (21) umfasst, auf welchem Steuerdaten gespeichert sind, welche das Steuersignal betreffen, welches als Antwortsignal zu senden ist.

7. Steuervorrichtung nach Anspruch 6, **dadurch gekennzeichnet, dass** die Steuerdaten Daten einbeziehen, welche unterschiedliche Parameter der Funktionen der elektronischen Vorrichtung (100) betreffen, welche gemäß der Auswahl des Benutzers zu steuern ist.

8. Steuervorrichtung nach mindestens einem der vorhergehenden Ansprüche, **dadurch gekennzeichnet, dass** die Sende-/Empfangsvorrichtung (15) eine großflächige Spule (20) für eine induktive Kopplung umfasst, welche auf einem Dünnschichtsubstrat angeordnet ist.

9. Steuervorrichtung nach mindestens einem der vorhergehenden Ansprüche, **dadurch gekennzeichnet, dass** die Sende-/Empfangsvorrichtung (15) eine passive Sende-/Empfangsvorrichtung ist.

10. Steuervorrichtung nach mindestens einem der vorhergehenden Ansprüche, **dadurch gekennzeichnet, dass** die Sende-/Empfangsvorrichtung (15) eine aktive Sende-/Empfangsvorrichtung mit einem Mikrochip (21) und einer internen Stromversorgungsquelle zur Spannungsversorgung des Mikrochips (21) ist.

11. Steuersystem, umfassend ein externes Energieversorgungsmittel (4) und eine Verarbeitungsvorrichtung (3), welche beide ausgestaltet sind, mit einer Steuervorrichtung nach mindestens einem der vorhergehenden Ansprüche verwendet zu werden.

12. Eingebaute elektronische Vorrichtung für ein Fahrzeug, umfassend ein Steuersystem nach Anspruch 11, wobei das Steuersignal, welches von der Steuervorrichtung (2) übertragen wird, zum Steuern der elektronischen Vorrichtung (100) ist.

13. Eingebaute elektronische Vorrichtung für ein Fahrzeug nach Anspruch 12, **dadurch gekennzeichnet, dass** sie ein Navigationssystem (45) mit einer Verarbeitungsvorrichtung (3) und einer Steuereinrichtung (50) zum Steuern des Navigationssystems auf der Grundlage von Signalen, welche von der Steuervorrichtung (2) empfangen wurden, umfasst.

14. Steuerverfahren für eine drahtlose Übertragung eines Steuersignals von einem Lenkrad eines Fahrzeugs zu einer Verarbeitungsvorrichtung zum Steuern einer abgesetzten elektronischen Vorrichtung (100), wobei das Steuerverfahren die Schritte umfasst:
- Empfangen eines Signals von einer externen Vorrichtung (3), und
- automatisches Übertragen eines Steuersignals zu der externen Verarbeitungsvorrichtung (3) in Abhängigkeit von dem empfangenen Signal,
wobei
das Steuerverfahren ferner den Schritt eines Aktivierens einer Signalübertragung durch Betätigen eines Aktivierungsmittels durch einen Benutzer für eine Signalübertragung umfasst, wenn die Übertragung des Steuersignals deaktiviert ist, wobei der Aktivierungsschritt ein Schließen einer Unterbrechung einer Antennenspule (20) für ein Koppeln mit einer Energieversorgung einer Sende-/Empfangsvorrichtung (15) umfasst.

15. Steuerverfahren nach Anspruch 14, **gekennzeichnet durch** den weiteren Schritt eines elektrischen oder induktiven Koppelns mit einem Feld, welches von einem externen Energieversorgungsmittel (4) bereitgestellt wird, für eine Energieversorgung für ein Empfangen des Signals von der externen Verarbeitungsvorrichtung (3) und/oder ein Übertragen des Steuersignals zu der externen Verarbeitungsvorrichtung (3) in Abhängigkeit von dem empfangenen Signal.

## Revendications

1. Appareil de commande monté sur un volant de direction d'un véhicule pour une transmission sans fil d'un signal de commande vers un dispositif de traitement (3) afin de commander un dispositif électronique distant (100), ledit appareil de commande (2) comprenant
- un transpondeur (15) incluant
- un moyen de réception (5) pour recevoir un signal en provenance du dispositif de traitement (3),
- un moyen de transmission (6) d'un signal de réponse pour transmettre automatiquement un signal de commande audit dispositif de traitement (3) en réponse au signal reçu,
**caractérisé en ce que** ledit transpondeur comprend
- un moyen de couplage (7) pour un couplage inductif avec un moyen externe d'approvisionnement en énergie (4) en vue d'une alimentation électrique dudit appareil de commande (2),
ledit appareil de commande (2) comprenant en outre un moyen de désactivation (8) pour désactiver ladite transmission de signal automatique par ledit moyen de transmission (6) et un moyen d'activation (7) pour activer une transmission automatique de signal lorsque ladite transmission de signal est désactivée, ledit moyen d'activation (7) étant configuré pour être opéré par le contact d'un doigt d'un utilisateur pour activer la transmission de signal, ledit moyen d'activation (7) fermant une interruption d'une bobine d'antenne (20) pour un couplage en vue d'une alimentation électrique dudit transpondeur.

2. Appareil de commande selon la revendication 1, **caractérisé en ce que** ledit moyen d'activation (7) comprend une touche à membrane (33).

3. Appareil de commande selon la revendication 1 ou 2, **caractérisé en ce que** ledit moyen d'activation (7) comprend un commutateur.

4. Appareil de commande selon au moins l'une des revendications précédentes, **caractérisé en ce que** ledit moyen de désactivation (8) est constitué par une section interrompue d'une antenne (20) de l'appareil de commande (2).

5. Appareil de commande selon au moins l'une des revendications précédentes, **caractérisé par** un incrémenteur pour la transmission de signaux différents en réponse à l'entrée par l'utilisateur.

6. Appareil de commande selon au moins l'une des revendications précédentes, **caractérisé en ce que** ledit transpondeur (15) comprend au moins une puce (21) montée sur un substrat à couche mince sur laquelle sont mémorisées des données de commande reliées au signal de commande à transmettre en tant que signal de réponse.

7. Appareil de commande selon la revendication 6, **caractérisé en ce que** lesdites données de commande comprennent des données reliées à des paramètres différents des fonctions du dispositif électronique (100) à commander en accord avec la sélection par l'utilisateur.

8. Appareil de commande selon au moins l'une des revendications précédentes, **caractérisé en ce que** ledit transpondeur (15) comprend une bobine à grande surface (20) pour un couplage inductif arrangée sur un substrat à couche mince.

9. Appareil de commande selon au moins l'une des revendications précédentes, **caractérisé en ce que** ledit transpondeur (15) est un transpondeur passif.

10. Appareil de commande selon au moins l'une des revendications précédentes, **caractérisé en ce que** ledit transpondeur (15) est un transpondeur actif présentant une puce (21) et une source interne d'alimentation électrique pour une alimentation en tension de ladite puce (21).

11. Système de commande comprenant un moyen externe d'approvisionnement en énergie (4) et un dispositif de traitement (3), les deux étant adaptés à être utilisés avec un appareil de commande selon au moins l'une des revendications précédentes.

12. Dispositif électronique incorporé pour un véhicule comprenant un système de commande selon la revendication 11, le signal de commande transmis par ledit appareil de commande (2) servant à commander ledit dispositif électronique (100).

13. Dispositif électronique incorporé pour un véhicule selon la revendication 12, **caractérisé en ce qu'**il comprend un système de navigation (45) présentant un dispositif de traitement (3) et un dispositif de commande (50) pour commander ledit système de navigation sur la base de signaux reçus dudit appareil de commande (2).

14. Procédé de commande pour une transmission sans fil d'un signal de commande provenant d'un volant de direction d'un véhicule vers un dispositif de traitement pour commander un dispositif électronique distant (100), ledit procédé de commande comprenant les étapes de
- réception d'un signal d'un dispositif externe (3), et
- transmission automatique d'un signal de commande vers ledit dispositif de traitement externe (3) en réponse au signal reçu, dans lequel
ledit procédé de commande comprend en outre l'étape d'activation d'une transmission de signal, lorsque la transmission dudit signal de commande est désactivée, par actionnement d'un moyen d'activation par un utilisateur pour une transmission de signal, l'étape d'activation comprenant la fermeture d'une interruption d'une bobine d'antenne (20) pour un couplage en vue d'une alimentation électrique d'un transpondeur (15).

15. Procédé de commande selon la revendication 14, **caractérisé par** l'étape ultérieure de couplage électrique ou inductif avec un champ fourni par un moyen externe d'approvisionnement en énergie (4) pour une alimentation électrique en vue de la réception dudit signal dudit dispositif de traitement externe (3) et/ou de la transmission dudit signal de commande vers ledit dispositif de traitement externe (3) en réponse au signal reçu.
